# EUROPÄISCHE PATENTSCHRIFT

(11) **EP 3 208 299 B1**
(45) Veröffentlichungstag und Bekanntmachung des Hinweises auf die Patenterteilung: **11.04.2018**
(21) Anmeldenummer: 16156509.8
(22) Anmeldetag: 19.02.2016
(51) Int. Cl.: C08J 9/224, C08J 9/232, C08J 9/236

(54) **VERFAHREN ZUR HERSTELLUNG EINES SCHALL- UND/ODER WÄRMEDÄMMELEMENTS SOWIE SCHALL- UND/ODER WÄRMEDÄMMELEMENT**
METHOD FOR PRODUCING A NOISE AND/OR HEAT INSULATION ELEMENT AND NOISE AND/OR HEAT INSULATION ELEMENT
PROCEDE DE FABRICATION D'UN ELEMENT D'ISOLATION PHONIQUE ET/OU THERMIQUE ET ELEMENT D'ISOLATION PHONIQUE ET/OU THERMIQUE

(43) Veröffentlichungstag der Anmeldung: 23.08.2017
(73) Patentinhaber: STO SE & Co. KGaA, 79780 Stühlingen (DE)
(72) Erfinder: Hitzler, Martin, 78244 Gottmadingen (DE); Weier, Andreas, 78647 Trossingen (DE); Burgeth, Gerald, 79787 Lauchringen (DE)
(74) Vertreter: Gottschalk, Matthias

(56) Entgegenhaltungen:
- EP-A1- 2 366 847
- EP-A1- 2 527 124
- EP-A2- 0 217 717
- WO-A1-97/43334
- DE-A1- 3 303 243
- DE-U1- 7 622 788

## Beschreibung

Die Erfindung betrifft ein Verfahren zur Herstellung eines Schall- und/oder Wärmedämmelements mit den Merkmalen des Oberbegriffs des Anspruchs 1. Ferner betrifft die Erfindung ein Schall- und/oder Wärmedämmelement mit den Merkmalen des Oberbegriffs des Anspruchs 11.

### Stand der Technik

Dämmelemente zur Schall- und/oder Wärmedämmung von Gebäuden können aus den unterschiedlichsten Dämmstoffen hergestellt sein. Besonders häufig jedoch, insbesondere im Fassadenbereich, finden Dämmelemente aus Polystyrol-Partikelschaum Einsatz. Denn diese weisen nicht nur gute Dämmwerte auf, sondern sind zudem vergleichsweise kostengünstig herzustellen. Die guten Dämmwerte sind vorrangig auf die luftgefüllten Poren bzw. Zellen zurückzuführen, die beim Schäumen der Polystyrol-Partikel ausgebildet werden. Analog eignen sich auch andere Polymere zur Ausbildung von Dämmstoffen, sofern deren Partikel schäumbar sind. Je größer das luftgefüllte Gesamtporenvolumen bzw. Gesamtzellvolumen ist, desto besser sind in der Regel die Dämmeigenschaften, insbesondere die Wärmedämmeigenschaften, des jeweiligen Dämmstoffs.

Das Gesamtporenvolumen bzw. Gesamtzellvolumen umfasst auch ein zwischen den Partikeln verbleibendes Zwickelvolumen, das je nach Verschweißungs- und/oder Verdichtungsgrad der Ausgangsstoffe unterschiedlich groß ausfallen kann.

Aus der EP 2 527 124 A1 gehen beispielhaft ein Formkörper zur Schall- und/oder Wärmedämmung von Gebäuden sowie ein Verfahren zur Herstellung eines solchen Formkörpers hervor. Bei dem Verfahren werden vorgeschäumte Polystyrol-Partikel unter Einwirkung von Druck und/oder Wärme verschweißt und/oder verdichtet, so dass ein aus den Zwickelräumen zwischen den Partikeln bestehendes, zusammenhängendes Hohlraumvolumen im Formkörper erhalten bleibt. Aufgrund des zusammenhängenden Hohlraumvolumens ist der Formkörper in der Lage, Wasserdampf und Wasser aufzunehmen und sofort wieder abzugeben. Der zur Schall- und/oder Wärmedämmung von Gebäuden vorgeschlagene Formkörper ist demnach insbesondere als Drainageplatte einsetzbar. Eine aktive Wasseraufnahme und temporäre Speicherung, beispielsweise aufgrund der Ausbildung von Kapillaren, soll jedoch verhindert werden, da hierdurch die Wärmedämmleistung des Formkörpers herabgesetzt wird.

In der EP 2 527 124 A1 wird ferner vorgeschlagen, die Polystyrol-Partikel vor dem Verschweißen und/oder Verdichten mit einem Bindemittel zu beschichten. Der Verbund der Polystyrol-Partikel untereinander wird dann vorrangig durch das außen auf die Partikel aufgebrachte Bindemittel bewirkt, wobei es sich vorzugsweise um ein organisches Bindemittel handelt. Der über das Bindemittel bewirkte Verbund soll insbesondere die mechanische Stabilität des Formkörpers erhöhen.

Es hat sich jedoch gezeigt, dass ein Formkörper aus Polystyrol-Partikelschaum, dessen Polystyrol-Partikel vor dem Verschweißen und/oder Verdichten mit einem organischen Bindemittel beschichtet worden sind, gegenüber einem Formkörper aus unbeschichteten Polystyrol-Partikeln zu einer erhöhten Wasseraufnahme neigt. Dies kann darauf zurückgeführt werden, dass die an sich wasserabweisenden Polystyrol-Partikel von einer Bindemittelschicht überdeckt werden, die gegenüber den Polystyrol-Partikeln weniger wasserabweisend oder sogar wasseranziehend wirkt. Da die Bindemittelbeschichtung zugleich eine dreidimensionale netzartige Struktur ausbildet, die den gesamten Formkörper durchzieht, wird eindringende Feuchtigkeit durch das Bindemittel im Inneren des Formkörpers festgehalten. In der Folge verringert sich die Wärmedämmleistung.

Darüber hinaus sind Polymer-Partikel bekannt, die sich im Unterschied zu Polystyrol-Partikeln nicht wasserabweisend verhalten. Hierzu zählen insbesondere Partikel aus Biopolymeren. Biopolymere können aus natürlichen Polymeren, wie beispielsweise Polymilchsäure oder Cellulose-Derivate, aufgebaut sein. Ferner können sie aus künstlich hergestellten Monomeren hergestellt werden, zu deren Herstellung wiederum natürliche Rohstoffe verwendet werden. Als Beispiel kann Polyethylen angeführt werden, sofern das verwendete Ethylen aus natürlichem organischem Abfallmaterial hergestellt ist. Biopolymere können demnach auch Polymere biogener Herkunft sein. Ferner kann man von Biopolymeren sprechen, wenn die Polymere natürlich biologisch abbaubar sind.

Soweit vorliegend Biopolymere Einsatz finden, werden hierunter insbesondere polare, hydrophile Polymere verstanden, die aus polaren, hydrophilen Monomeren aufgebaut sind.

Aus Biopolymeren hergestellte Polymer-Partikelschäume neigen zu einer erhöhten Wasseraufnahme, so dass sie zur Ausbildung eines Schall- und/oder Wärmedämmelements weniger geeignet sind. Es sei denn, dass zusätzliche Maßnahmen ergriffen werden, die das Schall- und/oder Wärmedämmelement vor einer erhöhten Wasseraufnahme schützen.

Aus der EP 2 366 847 A1 ist beispielsweise eine Dämm- und Drainageplatte aus geschäumten Polymer-Partikeln bekannt, die unter Zuhilfenahme eines Bindemittels miteinander verklebt worden sind. Auf diese Weise bleiben zwischen den Partikeln Zwickelräume erhalten, die ein zusammenhängendes netzartiges Hohlraumvolumen ausbilden, über das Wasser schwerkraftgetrieben abführbar ist. Um ein Abführen der Feuchtigkeit im Inneren der Platte zu unterstützen, weist die in dieser Druckschrift vorgeschlagene Platte ein sich verjüngendes freies Ende auf, das bei Anbringung der Platte an einer Gebäudeaußenwand unten zu liegen kommt und die Feuchtigkeit trichterartig zur Mitte der Platte hinleitet. Ferner wird eine nachträgliche Imprägnierung der Platte mit einem Imprägniermittel vorgeschlagen, das die Hydrophilie herabsetzen und die Drainageeigenschaften weiter verbessern soll.

Darüber hinaus sind Dämmstoffe aus aufgeschäumten Kunststoffkugeln und Bitumen oder einer bituminösen Verbindung bekannt, die eine erhöhte Wasserbeständigkeit besitzen. Derartige Dämmstoffe gehen beispielsweise aus der DE 33 03 243 A1, der DE 76 22 788 U1 und der EP 0 217 717 A2 hervor.

Ausgehend von dem vorstehend genannten Stand der Technik liegt der vorliegenden Erfindung die Aufgabe zugrunde, ein Schall- und/oder Wärmedämmelement aus einem Polymer-Partikelschaum bereitzustellen, das gute Dämmwerte und zudem eine geringe Wasseraufnahmefähigkeit besitzt. Ferner soll das Schall- und/oder Wärmedämmelement einfach und kostengünstig herzustellen sein.

Zur Lösung der Aufgabe werden das Verfahren mit den Merkmalen des Anspruchs 1 und das Schall- und/oder Wärmedämmelement mit den Merkmalen des Anspruchs 11 angegeben.

### Offenbarung der Erfindung

Bei dem vorgeschlagenen Verfahren zur Herstellung eines Schall- und/oder Wärmedämmelements werden schäumbare und/oder vorgeschäumte Polymer-Partikel verwendet. Die schäumbaren und/oder vorgeschäumten Polymer-Partikel werden mit einem Bindemittel beschichtet und anschließend einem Formgebungsprozess unterzogen, bei dem die Polymer-Partikel miteinander verklebt und versintert werden. Die Verklebung wird dabei mittels des Bindemittels bewirkt. Erfindungsgemäß wird zum Beschichten der schäumbaren und/oder vorgeschäumten Polymer-Partikel ein nicht-hydrophiles Bindemittel verwendet.

Das nicht-hydrophile Bindemittel führt zur Ausbildung einer die Polymer-Partikel umhüllenden Beschichtung, die nicht nur der Verklebung der Polymer-Partikel dient, sondern darüber hinaus die Hydrophilie des nach dem Verfahren hergestellten Schall- und/oder Wärmedämmelements herabsetzt. Das heißt, dass ein nach dem erfindungsgemäßen Verfahren hergestelltes Schall- und/oder Wärmedämmelement eine geringere Wasseraufnahmefähigkeit besitzt.

Die Verwendung eines nicht-hydrophilen Bindemittels macht demnach eine nachträgliche Imprägnierung des Schall- und/oder Wärmedämmelements zur Herabsetzung der Hydrophilie entbehrlich. Das heißt, dass die Herstellung eines Schall- und/oder Wärmedämmelements mit verringerter Wasseraufnahmefähigkeit durch das erfindungsgemäße Verfahren vereinfacht wird. Dies wirkt sich ferner kostensenkend aus, da nicht nur ein weiterer Arbeitsschritt entfällt, sondern das nicht-hydrophile Bindemittel zugleich das Imprägniermittel ersetzt.

Aufgrund der herabgesetzten Hydrophilie des nach dem erfindungsgemäßen Verfahren hergestellten Schall- und/oder Wärmedämmelements wird aktiv weniger Feuchtigkeit aufgenommen. Denn je geringer die Hydrophilie ist, desto schlechter ist das Benetzungsverhalten. Das heißt, dass Wassertropfen weniger zum Spreiten neigen und idealerweise kugelförmig abperlen. Somit wird deutlich weniger Wasser an den Polymer-Partikeln bzw. deren Beschichtung angelagert oder absorbiert. Auf diese Weise wirkt die Beschichtung mit dem nicht-hydrophilen Bindemittel einer aktiven Wasseraufnahme entgegen.

Ein nach dem erfindungsgemäßen Verfahren hergestelltes Schall- und/oder Wärmedämmelement ist somit insbesondere für den Einsatz im Außenbereich und/oder in besonders feuchtigkeitsbelasteten Bereichen geeignet. Ferner eignet es sich zur Verwendung als Drainageelement bzw. -platte.

Erfindungsgemäß handelt es sich bei dem nicht-hydrophilen Bindemittel um ein organisches Polymer-Bindemittel. Ein solches besitzt eine hohe Bindekraft, so dass ein stabiler Verbund der Polymer-Partikel untereinander erreicht wird.

Die Hydrophilie eines organischen Polymer-Bindemittels wird maßgeblich durch folgende Faktoren bestimmt:
- die Polarität der Monomere
- die Anordnung der Monomerer untereinander sowie
- die Länge und den Vernetzungsgrad der Polymerketten.

Sofern dem Bindemittel zur Ausbildung der Beschichtung Additive zugegeben werden, beispielsweise, um die Verarbeitungsfähigkeit des Bindemittels zu verbessern, spielen ferner die Art und die Menge der Additive eine Rolle.

Da Hersteller von Bindemitteln hinsichtlich der vorstehend genannten Faktoren in der Regel keine Angaben machen, muss die Hydrophilie des Bindemittels versuchsweise ermittelt und/oder anhand anderer Faktoren bzw. Parametern bestimmt werden.

Beispielsweise kann versuchsweise der Kontaktwinkel (KW) von Wasser und von Diiodmethan auf der Bindemitteloberfläche bestimmt werden. Aus den Kontaktwinkeln wird dann die Oberflächenenergie (OFE) berechnet, die sich additiv aus einem polaren Anteil (PA) und einem (unpolaren) dispersen Anteil (DA) zusammensetzt. Der polare Anteil (PA) ist ein Maß für die Wechselwirkung zwischen der Oberfläche und einem polaren Stoff, wie beispielsweise Wasser. Der disperse Anteil (DA) ist ein Maß für die Wechselwirkung zwischen der Oberfläche und einem unpolaren Stoff, wie beispielsweise Öl.

Dabei geben nicht nur die absoluten Größen der OFE, des PA und des DA Aufschluss über die hydrophilen Eigenschaften einer Oberfläche, sondern auch die Verhältnisse der Größen zueinander: DA/PA, PA/OFE sowie DA/OFE.

Sämtliche vorstehend genannten Parameter können versuchsweise ermittelt werden, so dass derartige Versuche vorzugsweise der Durchführung des erfindungsgemäßen Verfahrens vorausgehen. Auf diese Weise kann vorab festgestellt werden, ob ein Bindemittel "nicht-hydrophil" und damit zur Durchführung des erfindungsgemäßen Verfahrens geeignet ist.

Zur versuchsweisen Ermittlung bzw. Bestimmung der relevanten Parameter wird weiterhin vorzugsweise das reine Bindemittel in einer Nassschichtstärke von 250 µm auf eine Lenetta-Folie aufgerakelt. Nach drei Tagen Trocknung bei 23°C und 50% relativer Luftfeuchte wird der Kontaktwinkel eines Wassertropfens nach einer Minute Aquilibrierungszeit auf der Oberfläche der Bindemittelschicht mit einem Krüss Mobile Drop GH11 (Advance Software Version 1.2.1) gemessen. In gleicher Weise wird der Kontaktwinkel von Diiodmethan auf der Oberfläche der Bindemittelschicht bestimmt. Anschließend werden die Oberflächenenergie gemäß DIN 55660-2 (Dezember 2011), Verfahren nach Owens, Wendt, Rabel und Kaeble (OWRK) sowie der polare Anteil und der disperse Anteil ermittelt. Sofern das Bindemittel ein Dispersionspulver ist, wird dieses vorab mit Wasser redispergiert, so dass der Polymer-Feststoffanteil 50 Gew.-% beträgt.

Bei dem erfindungsgemäßen Verfahren wird ein Bindemittel verwendet, das einen statischen Anfangskontaktwinkel von Wasser nach 1 min Äquilibrieren ≥ 35°, vorzugsweise ≥ 40°, weiterhin vorzugsweise ≥ 50°, aufweist.

Die Eignung eines Bindemittels zur Durchführung des erfindungsgemäßen Verfahrens wird ergänzend anhand der Oberflächenenergie des Bindemittels festgestellt. Erfindungsgemäß wird ein Bindemittel verwendet, das eine Oberflächenenergie ≤ 70 mN/m, vorzugsweise ≤ 65 mM/m, weiterhin vorzugsweise ≤ 60 mN/m, aufweist. Die Oberflächenenergie sollte jedoch oberhalb 30 mN/m liegen.

Des Weiteren erfindungsgemäß wird ein Bindemittel verwendet, das einen polaren Anteil der Oberflächenenergie ≤ 35 mN/m, vorzugsweise ≤ 30 mN/m, weiterhin vorzugsweise ≤ 25 mN/m, aufweist. Dabei sollte vorzugsweise ein Wert von 1 mN/m nicht unterschritten werden.

Weiterhin erfindungsgemäß wird ein Bindemittel verwendet, das einen dispersen Anteil der Oberflächenenergie ≥ 10 mN/m, vorzugsweise ≥ 20 mN/m, weiterhin vorzugsweise ≥ 30 mN/m, aufweist. Der disperse Anteil der Oberflächenenergie sollte jedoch nicht über 60 mN/m liegen.

Von besonderer Bedeutung ist das Verhältnis der Größen Oberflächenenergie (OFE), polarer Anteil (PA) und disperser Anteil (DA) zueinander.

Das Verhältnis DA/PA beträgt bevorzugt > 1,0, vorzugsweise > 1,4, weiterhin vorzugsweise > 1,6. Die Kontaktwinkelmessung mit Wasser lässt bereits Rückschlüsse auf das Verhältnis PA/DA zu. Denn ein kleiner Kontaktwinkel (Wasser) bedeutet, dass der polare Anteil groß ist, woraus sich ein Verhältnis PA/DA ergibt, das vergleichsweise klein ist.

Das Verhältnis PA/OFE beträgt bevorzugt < 0,50, vorzugsweise < 0,45, weiterhin vorzugsweise < 0,40.

Hieraus ergeben sich für das Verhältnis DA/OFE Werte > 0,50, vorzugsweise > 0,55, weiterhin vorzugsweise > 0,60.

Als "nicht-hydrophiles" Bindemittel im Sinne der vorliegenden Anmeldung wird demnach ein organisches Polymer-Bindemittel verstanden, auf dessen Oberfläche Kontaktwinkel ≥ 35° mit Wasser ausgebildet werden und dessen Oberfläche eine OFE ≤ 70 mN/m aufweist, wobei der polare Anteil der OFE ≤ 35 mN/m und der disperse Anteil der OFE ≥ 10 mN/m ist.

Gemäß einer bevorzugten Ausführungsform der Erfindung wird eine wässrige Polymerdispersion auf Basis von Acrylat, Methacrylat, Styrolacrylat, Vinylacetat, Vinylacetat-Ethylen, Vinylestern, Vinylchlorid, Polyurethan, Polysiloxane und/oder Silikonharze als Bindemittel verwendet. Diese weist den Vorteil auf, dass sie sich beim Beschichten filmartig um die Polymer-Partikel legt, so dass eine annähernd gleichmäßige Verteilung des Bindemittels sichergestellt ist. Zudem kann durch die Verwendung einer wässrigen Polymerdispersion die Haftung des Bindemittels an den Polymer-Partikeln verbessert werden. Alternativ kann auch ein trockenes Dispersionspulver auf Basis von Acrylat, Methacrylat, Styrolacrylat, Vinylacetat, Vinylacetat-Ethylen, Vinylestern, Vinylchlorid, Polyurethan, Polysiloxane und/oder Silikonharze als Bindemittel verwendet werden. Die Haftung des trockenen Dispersionspulvers auf den Polymer-Partikeln kann dadurch verbessert werden, dass die Partikel zuvor angefeuchtet werden und/oder vorgeschäumte Polymer-Partikel verwendet werden, die noch eine Restfeuchte aufweisen.

Ferner wird vorgeschlagen, dass schäumbare und/oder vorgeschäumte Polymer-Partikel aus Polystyrol, Polyurethan, Polypropylen, Polyethylen und/oder Polyethylenterephthalat verwendet werden. Diese Polymere weisen Monomere auf, die unpolar sind und daher sehr wenig Wasser aufnehmen bzw. wasserabweisend sind. Das gilt entsprechend für hieraus hergestellte Polymer-Partikelschäume. Durch die erfindungsgemäß vorgeschlagene Beschichtung mit einem nicht-hydrophilen Bindemittel kann die geringe Wasseraufnahmefähigkeit eines solchen Polymer-Partikelschaums erhalten werden oder sogar weiter herabgesetzt werden.

Darüber hinaus können auch schäumbare und/oder vorgeschäumte Polymer-Partikel eines Biopolymers verwendet werden. Bevorzugt handelt es sich bei dem Biopolymer um Polylactid bzw. Polymilchsäure und/oder um ein Biopolymer auf Basis von Stärke oder Cellulose, beispielsweise Celluloseacetat, Cellulosepropionat oder Cellulosebutyrat. Wie eingangs bereits erwähnt, bestehen Biopolymere im Unterschied zu den vorstehend genannten Polymeren aus polaren Monomeren.

Hieraus hergestellte Polymer-Partikelschäume weisen dementsprechend eine erhöhte Wasserbenetzbarkeit und Wasseraufnahmefähigkeit auf. Durch die Beschichtung der Polymer-Partikel mit einem nicht-hydrophilen Bindemittel kann die Wasseraufnahmefähigkeit herabgesetzt werden.

Die Doppelfunktion des nicht-hydrophilen Bindemittels als Klebemittel und als Imprägniermittel kommt bei der Verwendung von Biopolymeren besonders gut zum Tragen. Denn Biopolymere versintern in der Regel schlechter als die vorstehend genannten anderen Polymere. Somit ist eine zusätzliche Verklebung der Partikel unerlässlich, wenn ein stabiler Verbund der Partikel erzielt werden soll.

Bevorzugt werden Polymer-Partikel verwendet, die im vorgeschäumten Zustand eine Partikelgröße von 2 bis 10 mm, vorzugsweise von 2 bis 8 mm, weiterhin vorzugsweise von 3 bis 7 mm, aufweisen. Damit erreichen die Dämmelemente ausreichend gute Wärmedämmwerte.

Des Weiteren erfindungsgemäß werden 60 bis 97 Gew.-% schäumbare und/oder vorgeschäumte Polymer-Partikel sowie 3 bis 40 Gew.-% Bindemittel, jeweils bezogen auf das Feststoff Gesamtgewicht der Ausgangsstoffe, verwendet. Die Höhe des Bindemittelanteils trägt dazu bei, dass das nach dem erfindungsgemäßen Verfahren hergestellte Schall- und/oder Wärmedämmelement eine hohe mechanische Stabilität aufweist.

Darüber hinaus können den Ausgangsstoffen zur Herstellung eines Schall- und/oder Wärmedämmelements übliche Additive zugegeben werden. Der Anteil der Additive beträgt vorzugsweise 0 bis 40 Gew.-%, vorzugsweise 0 bis 30 Gew.-%, weiterhin vorzugsweise 0 bis 20 Gew.-%, bezogen auf das Feststoff-Gesamtgewicht der Ausgangsstoffe.

Bevorzugt wird mindestens ein Additiv, insbesondere in Form eines Flammschutzmittels, zugegeben, um die Brennbarkeit bzw. Entflammbarkeit des Polymer-Partikelschaums herabzusetzen. Als Flammschutzmittel wird bevorzugt ein intumeszierendes Flammschutzmittel, vorzugsweise Blähgraphit, verwendet. Blähgraphit liegt in der Regel in Form grober und/oder kantiger Teilchen vor, die eine gute Verzahnung mit den Polystyrol-Partikeln gewährleisten. Die Zugabe von Blähgraphit als Flammschutzmittel hat demnach keinen negativen Einfluss auf die Stabilität des Verbunds der Polymer-Partikel untereinander. Des Weiteren ist Blähgraphit - im Unterschied zu den meisten herkömmlichen Flammschutzmitteln - toxikologisch unbedenklich.

Die Zugabe des Flammschutzmittels kann in der Weise erfolgen, dass die Polymer-Partikeln, bevor sie dem Formgebungsprozess unterzogen werden, zusätzlich mit dem Flammschutzmittel beschichtet werden. Die Beschichtung mit dem Flammschutzmittel kann vor, während oder nach der Beschichtung mit dem Bindemittel erfolgen. Beispielsweise kann das Flammschutzmittel dem Bindemittel zugegeben werden, so dass die Polymer-Partikel in nur einem Beschichtungsvorgang mit dem Flammschutzmittel und dem Bindemittel beschichtet werden können.

Zur Formgebung werden vorzugsweise die beschichteten Polymer-Partikel in eine Form eingebracht und unter Zugabe von Druck und/oder Wärme verklebt und versintert. Über die Druck- und/oder Temperaturverhältnissen beim Versintern kann die Größe der zwischen den Polymer-Partikeln verbleibenden Zwickelräume gesteuert werden. In Abhängigkeit vom jeweiligen Komprimierungsgrad und/oder von der Expansion der Polymer-Partikel kann demnach ein Schall- und/oder Wärmedämmelement hergestellt werden, das zudem eine Drainagefunktion besitzt. Eine die Expansion begrenzende Wirkung wird ferner über das Bindemittel erreicht, das sich beim Versintern als Bindemittelfilm um die Polymer-Partikel legt und somit einer Expansion der Partikel entgegen wirkt. Das Maß der Expansion ist demnach über den Bindemittelanteil steuerbar.

Zur Lösung der eingangs genannten Aufgabe wird ferner ein Schall- und/oder Wärmedämmelement aus einem Polymer-Partikelschaum vorgeschlagen, der miteinander verklebte und versinterte Polymer-Partikel umfasst, wobei die Verklebung mittels eines Bindemittels bewirkt wird, mit dem die Polymer-Partikel vor dem Versintern beschichtet worden sind. Erfindungsgemäß ist das Bindemittel nicht-hydrophil und bildet eine die Polymer-Partikel zumindest teilweise umhüllende Beschichtung aus. Vorzugsweise wird eine die Polymer-Partikel im Wesentlichen vollständig umhüllende Beschichtung erreicht.

Da die Bindemittelbeschichtung die einzelnen Polymer-Partikel weitgehend umhüllt, sind auch die "inneren" Oberflächen, das heißt, die die Zwickelräume zwischen den Partikeln begrenzenden Oberflächen, mit dem Bindemittel beschichtet. Eine nachträgliche Imprägnierung zur Herabsetzung der Hydrophilie kann demnach entfallen. Das nicht-hydrophile Bindemittel besitzt demnach eine Doppelfunktion, nämlich die eines Klebemittels und die eines Imprägniermittels.

Die Beschichtung mit dem nicht-hydrophilen Bindemittel bewirkt, dass die Wasserbenetzbarkeit und demzufolge die Wasseraufnahmefähigkeit des Schall- und/oder Wärmedämmelements entsprechend gering sind. Auf diese Weise ist sichergestellt, dass eindringende Feuchtigkeit, insbesondere in Form von Wasser und/oder Wasserdampf, nicht zu einer Verschlechterung der Dämmeigenschaften, insbesondere der Wärmedämmeigenschaften, des Schall- und/oder Wärmedämmelements führt. Denn die eindringende Feuchtigkeit wird sicher abgeführt und nicht in signifikantem Maße temporär gespeichert.

Das angegebene Schall- und/oder Wärmedämmelement eignet sich daher insbesondere zur Anwendung im Außenbereich und/oder in feuchtigkeitsbelasteten Bereichen. Ferner kann das Schall- und/oder Wärmedämmelement als Drainageelement bzw. -platte eingesetzt werden.

Als nicht-hydrophil im Sinne der vorliegenden Anmeldung wird ein Bindemittel angesehen, das die nachfolgend genannten Parameter erfüllt, die sich auf den Kontaktwinkel von Wasser und/oder auf die Oberflächenenergie beziehen. Erfindungsgemäß weist das die Beschichtung ausbildende Bindemittel einen statischen Anfangskontaktwinkel von Wasser nach 1 min Äquilibrieren ≥ 35°, vorzugsweise ≥ 40°, weiterhin vorzugsweise ≥ 50°, auf.

Ferner weist das die Beschichtung ausbildende Bindemittel erfindungsgemäß eine Gesamt-Oberflächenenergie gemäß DIN 55660-2 ≤ 70 mN/m, vorzugsweise ≤ 65 mN/m, weiterhin vorzugsweise ≤ 60 mN/m, auf. Des Weiteren erfindungsgemäß weist das die Beschichtung ausbildende Bindemittel einen polaren Anteil der Oberflächenenergie gemäß DIN 55660-2 ≤ 35 mN/m, vorzugsweise ≤ 30 mN/m, weiterhin vorzugsweise ≤ 25 mN/m, auf.

Weiterhin erfindungsgemäß weist das die Beschichtung ausbildende Bindemittel einen dispersen Anteil der Oberflächenenergie gemäß DIN 55660-2 ≥ 10 mN/m, vorzugsweise ≥ 20 mN/m, weiterhin vorzugsweise ≥ 30 mN/m, auf. Erfindungsgemäß ist das nicht-hydrophile Bindemittel ein organisches Polymer-Bindemittel. Vorzugsweise wird die Beschichtung durch ein Bindemittel auf Basis von Acrylat, Methacrylat, Styrolacrylat, Vinylacetat, Vinylacetat-Ethylen, Vinylestern, Vinylchlorid, Polyurethan, Polysiloxane und/oder Silikonharze ausgebildet. Ob es sich hierbei tatsächlich um ein nicht-hydrophiles Bindemittel handelt muss ggf. zuvor versuchsweise ermittelt werden, wenn die vorstehend genannten Parameter nicht bekannt sind. Hierbei kann wie bereits zuvor in Verbindung mit dem erfindungsgemäßen Verfahren beschrieben vorgegangen werden.

Der Polymer-Partikelschaum enthält vorzugsweise Polymer-Partikel aus Polystyrol, Polyurethan, Polypropylen, Polyethylen und/oder Polyethylenterephtalat. Diese Polymere weisen Monomere auf, die unpolar und damit bereits von sich aus wasserabweisend sind. Durch die Beschichtung mit dem nicht-hydrophilen Bindemittel kann diese Eigenschaft erhalten werden oder sogar gesteigert werden. Ferner kann einer aktiven Wasseraufnahme durch Kapillareffekte entgegengewirkt werden, um beispielsweise die Drainagewirkung der Schall- und/oder Wärmedämmplatte zu verbessern.

Alternativ oder ergänzend kann der Polymer-Partikelschaum Polymer-Partikel aus einem Biopolymer, insbesondere aus Polylactid und/oder aus einem Biopolymer auf Basis von Stärke oder Cellulose, beispielsweise Celluloseacetat, Cellulosepropionat und/oder Cellulosebutyrat, enthalten. Monomere dieser Biopolymere sind naturgemäß polar und Polymere dann selbst relativ polar. Ein hieraus hergestelltes Schall- und/oder Wärmedämmelement weist demnach eine vergleichsweise gute Wasserbenetzbarkeit bzw. hohe Wasseraufnahmefähigkeit auf. Die Umhüllung der Polymer-Partikel mit der das nicht-hydrophile Bindemittel enthaltenden Beschichtung bewirkt jedoch, dass die Wasseraufnahmefähigkeit herabgesetzt wird. Insofern kommen hier die Vorteile der Erfindung besonders gut zum Tragen.

Ferner wird vorgeschlagen, dass ein Flammschutzmittel, vorzugsweise ein intumeszierendes Flammschutzmittel, insbesondere Blähgraphit, enthalten ist. Das Flammschutzmittel setzt die Brennbarkeit bzw. Entflammbarkeit des Schall- und/oder Wärmedämmelements herab. Die Vorzüge von Blähgraphit wurden bereits vorstehend erwähnt, so dass hierauf verwiesen wird.

Des Weiteren bevorzugt ist das erfindungsgemäße Schall- und/oder Wärmedämmelement nach dem erfindungsgemäßen Verfahren hergestellt worden.

Das erfindungsgemäße Verfahren und das erfindungsgemäße Schall- und/oder Wärmedämmelement werden nachfolgend anhand konkreter Beispiele näher erläutert.

Folgende Bindemittel wurden verwendet:
Bindemittel 1: eine wässrige Copolymerdispersion aus Vinylacetat, Ethylen und Methacrylsäureestern, stabilisiert mit Polyvinylalkohol, Festkörpergehalt ca. 50 Gew.-%.

Bindemittel 2: eine wässrige Polymerdispersion aus Acryl- und Methacrylsäureestern, Festkörpergehalt ca. 48 Gew.-%.

Bindemittel 3: ein Dispersionspulver auf Vinylacetat- und Ethylen-Basis, stabilisiert mit Polyvinylalkohol.

Um die jeweiligen Kontaktwinkel, vorliegend von Wasser und von Diiodmethan, sowie die Oberflächenenergien zu ermitteln, wurden Aufzüge der wässrigen Polymerdispersionen bzw. der mit der gleichen Menge Wasser zuvor redispergierten Dispersionspulver jeweils in einer Nassschichtstärke von 250 µm auf Lenetta-Folie aufgerakelt und drei Tage bei 23°C und 50% relativer Luftfeuchte getrocknet. Anschließend wurden die Kontaktwinkel der Wasser- bzw. Diiodmethan-Tropfen nach 1 min Aquilibrierungszeit auf der jeweiligen Oberfläche gemessen, die Oberflächenenergien sowie die polaren und dispersen Anteile der jeweiligen Oberflächenenergie ermittelt. Die Messung der Kontaktwinkel erfolgte mit einem Krüss Mobile Drop GH11 (Advance Software Version 1.3.1), und zwar an der Dreiphasen-Berührungslinie zwischen Festkörper, Flüssigkeit und Gas. Es wurden jeweils fünf Messungen an unterschiedlichen Stellen der jeweiligen Oberflächen vorgenommen. Hierzu wurden jeweils fünf Tropfen Wasser bzw. Diiodmethan auf die Oberflächen gegeben. Die Messergebnisse wurden anschließend gemittelt.

Die Messergebnisse sind in der nachstehenden Tabelle aufgeführt:

| | KW Wasser [°] | KW Diiodmethan [°] | Gesamt-OFE [mN/M] | Polarer Anteil [mN/m] | Disperser Anteil [mN/m] |
|---|---|---|---|---|---|
| BM 1 | 27,1 | 121,6 | 75,1 | 72,7 | 2,9 |
| BM 2 | 73,4 | 53,3 | 40,4 | 8,0 | 32,4 |
| BM 3 | 41,4 | 33,7 | 64,3 | 21,7 | 42,6 |

Entsprechend der in dieser Anmeldung angegebenen Definition eines nicht-hydrophilen Bindemittels, sind lediglich die Bindemittel 2 und 3 als solche anzusehen. Das Bindemittel 1 fällt nicht hierunter.

### Beispiel 1

Es wurden 700 g vorgeschäumte Polystyrol-Partikel mit einer Partikelgröße von 4 bis 7 mm und einer Schüttdichte von etwa 15 kg/m³ mit 200 g des Bindemittels 1 beschichtet, indem die Polystyrol-Partikel und die Polymerdispersion innig gemischt wurden. Der Mischung wurden vor dem Trocknen der Polymerdispersion 150 g Blähgraphit zugegeben. Von dieser Mischung wurden 9 L in eine Form mit einer Grundfläche der Abmessungen 30 cm x 30 cm gefüllt und unter Druck und Wärme (100°C), wobei Wasserdampf als Heizmedium diente, der die Form vollflächig durchströmte, zu einer Platte mit den Abmessungen 30 cm x 30 cm x 7 cm verpresst. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 35 W/(mK) und eine Dichte ρ nach DIN EN 1602 von 37,3 kg/m³. Die Wasseraufnahme nach DIN EN 1609 betrug 496 g/m².

### Beispiel 2

Es wurden 700 g vorgeschäumte Polystyrol-Partikel mit einer Partikelgröße von 4 bis 7 mm und einer Schüttdichte von etwa 15 kg/m³ mit 200 g des Bindemittels 2 beschichtet, indem die Polystyrol-Partikel und die Polymerdispersion innig gemischt wurden. Der Mischung wurden vor dem Trocknen der Polymerdispersion 150 g Blähgraphit zugegeben. Von dieser Mischung wurden 9 L in eine Form mit einer Grundfläche der Abmessungen 30 cm x 30 cm gefüllt und unter Druck und Wärme (100°C), wobei Wasserdampf als Heizmedium diente, der die Form vollflächig durchströmte, zu einer Platte mit den Abmessungen 30 cm x 30 cm x 7 cm verpresst. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 35 W/(mK) und eine Dichte ρ nach DIN EN 1602 von 35,9 kg/m³. Die Wasseraufnahme nach DIN EN 1609 betrug 170 g/m².

### Beispiel 3

Es wurden 350 g schäumbare Polystyrol-Partikel ("EPS-Beads") mit 70 g des Bindemittels 3 und 100 g Blähgraphit gemischt und unter Zugabe von Druck (1 bar) und Wärme (100°C), wobei Wasserdampf als Heizmedium diente, vorgeschäumt. Dabei erweichte das Dispersionspulver und bildete einen Polymerfilm auf den vorgeschäumten Polystyrol-Partikeln aus, der das Blähgraphit an der Oberfläche der Partikel fixierte. Anschließend wurden die beschichteten und vorgeschäumten Polymer-Partikel in einem Fließbetttrockner getrocknet. 9 L der beschichteten und mit Blähgraphit beladenen, vorgeschäumten Polystyrol-Partikel wurden in eine Form mit den Abmessungen 30 cm x 30 cm x 10 cm gegeben und unter Druck und Wärme endgeschäumt, wobei wiederum Wasserdampf als Heizmedium diente. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 33 W/(mK) und eine Dichte ρ nach DIN EN 1602 von 25,0 kg/m³. Die Wasseraufnahme nach DIN EN 1609 betrug 132 g/m².

### Beispiel 4

Es wurden 9 L unbeschichtete vorgeschäumte Polylactid-Partikel mit einer Partikelgröße von 2 bis 3 mm und einer Schüttdichte von etwa 22 kg/m³ in eine Form mit einer Grundfläche der Abmessungen 30 cm x 30 cm gefüllt und unter Druck und Wärme (100°C), wobei Wasserdampf als Heizmedium diente, der die Form vollflächig durchströmte, zu einer Platte mit den Abmessungen 30 cm x 30 cm x 7 cm verpresst. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 37 W/(mK) und eine Dichte ρ nach DIN EN 1602 von 27,9 kg/m³ auf. Die Wasseraufnahme nach DIN EN 1609 betrug 1089 g/m².

### Beispiel 5

Es wurden 1000 g vorgeschäumte Polylactid-Partikel mit einer Partikelgröße von 2 bis 3 mm und einer Schüttdichte von etwa 22 kg/m³ mit 400 g des Bindemittels 2 beschichtet, indem die Polylactid-Partikel und die Polymerdispersion innig gemischt wurden. Von dieser Mischung wurden 9 L in eine Form mit einer Grundfläche der Abmessungen 30 cm x 30 cm gefüllt und unter Druck und Wärme (100°C), wobei Wasserdampf als Heizmedium diente, der die Form vollflächig durchströmte, zu einer Platte mit den Abmessungen 30 cm x 30 cm x 7 cm verpresst. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 38 W/(mK) und eine Dichte ρ nach DIN EN 1602 von 37,1 kg/m³ auf. Die Wasseraufnahme nach DIN EN 1609 betrug 277 g/m².

Die Beispiele zeigen, dass die Verwendung eines nicht-hydrophilen Bindemittels (vorliegend Bindemittel 2 und 3) entsprechend der Beispiele 2, 3 und 5 zu einem Formkörper führt, bei dem die Wasseraufnahme deutlich geringer ist.

Der Formkörper nach Beispiel 3 wurde ferner hinsichtlich seiner Wasserdurchlässigkeit getestet. Auf der Oberfläche des Formteils aufgebrachtes Wasser durchdrang dieses schnell und vollständig.

## Patentansprüche

1. Verfahren zur Herstellung eines Schall- und/oder Wärmedämmelements unter Verwendung schäumbarer und/oder vorgeschäumter Polymer-Partikel, die mit einem organischen Bindemittel beschichtet und anschließend einem Formgebungsprozess unterzogen werden, bei dem die Polymer-Partikel miteinander verklebt und versintert werden, wobei die Verklebung mittels des Bindemittels bewirkt wird, und wobei 60 bis 97 Gew.-% schäumbare und/oder vorgeschäumte Polymer-Partikel und 3 bis 40 Gew.-% Bindemittel, jeweils bezogen auf das Feststoff-Gesamtgewicht der Ausgangsstoffe, verwendet werden,
**dadurch gekennzeichnet, dass** zum Beschichten der schäumbaren und/oder vorgeschäumten Polymer-Partikel ein nicht-hydrophiles Polymer-Bindemittel verwendet wird, das einen statischen Anfangskontaktwinkel von Wasser nach 1 min Äquilibrieren ≥ 35°, eine Oberflächenenergie gemäß DIN 55660-2 ≤ 70 mN/m, einen polaren Anteil der Oberflächenenergie gemäß DIN 55660-2 ≤ 35 mN/m und einen dispersen Anteil der Oberflächenenergie gemäß DIN 55660-2 ≥ 10 mN/m aufweist.

2. Verfahren nach Anspruch 1,
**dadurch gekennzeichnet, dass** ein Polymer-Bindemittel verwendet wird, das einen statischen Anfangskontaktwinkel von Wasser nach 1 min Äquilibrieren ≥ 40°, vorzugsweise ≥ 50°, aufweist.

3. Verfahren nach Anspruch 1 oder 2,
**dadurch gekennzeichnet, dass** ein Polymer-Bindemittel verwendet wird, das eine Oberflächenenergie gemäß DIN 55660-2 ≤ 65 mN/m, vorzugsweise ≤ 60 mN/m, aufweist.

4. Verfahren nach einem der vorhergehenden Ansprüche,
**dadurch gekennzeichnet, dass** ein Polymer-Bindemittel verwendet wird, das einen polaren Anteil der Oberflächenenergie gemäß DIN 55660-2 ≤ 30 mN/m, vorzugsweise ≤ 25 mN/m, aufweist.

5. Verfahren nach einem der vorhergehenden Ansprüche,
**dadurch gekennzeichnet, dass** ein Polymer-Bindemittel verwendet wird, das einen dispersen Anteil der Oberflächenenergie gemäß DIN 55660-2 ≥ 20 mN/m, vorzugsweise ≥ 30 mN/m, aufweist.

6. Verfahren nach einem der vorhergehenden Ansprüche,
**dadurch gekennzeichnet, dass** eine wässrige Polymerdispersion oder ein Dispersionspulver auf Basis von Acrylat, Methacrylat, Styrolacrylat, Vinylacetat, Vinylacetat-Ethylen, Vinylestern, Vinylchlorid, Polyurethan, Polysiloxane und/oder Silikonharze als Bindemittel verwendet wird.

7. Verfahren nach einem der vorhergehenden Ansprüche,
**dadurch gekennzeichnet, dass** schäumbare und/oder vorgeschäumte Polymer-Partikel aus Polystyrol, Polyurethan, Polypropylen, Polyethylen und/oder Polyethylenterephthalat verwendet werden.

8. Verfahren nach einem der vorhergehenden Ansprüche,
**dadurch gekennzeichnet, dass** schäumbare und/oder vorgeschäumte Polymer-Partikel aus einem Biopolymer, insbesondere aus Polylactid und/oder aus einem Biopolymer auf Basis von Stärke oder Cellulose, beispielsweise Celluloseacetat, Cellulosepropionat und/oder Cellulosebutyrat, verwendet werden.

9. Verfahren nach einem der vorhergehenden Ansprüche,
**dadurch gekennzeichnet, dass** mindestens ein Additiv, insbesondere in Form eines Flammschutzmittels, zugegeben wird, wobei es sich vorzugsweise um ein intumeszierendes Flammschutzmittel, vorzugsweise um Blähgraphit handelt.

10. Verfahren nach einem der vorhergehenden Ansprüche,
**dadurch gekennzeichnet, dass** die beschichteten Polymer-Partikel zur Formgebung in eine Form eingebracht und unter Zugabe von Druck und/oder Wärme verklebt und versintert werden.

11. Schall- und/oder Wärmedämmelement aus einem Polymer-Partikelschaum, der miteinander verklebte und versinterte Polymer-Partikel umfasst, wobei die Verklebung mittels eines organischen Bindemittels bewirkt wird, mit dem die Polymer-Partikel vor dem Versintern beschichtet worden sind, und wobei 60 bis 97 Gew.-% schäumbare und/oder vorgeschäumte Polymer-Partikel und 3 bis 40 Gew.-% Bindemittel, jeweils bezogen auf das Feststoff-Gesamtgewicht der Ausgangsstoffe, verwendet worden sind, **dadurch gekennzeichnet, dass** das Bindemittel eine die Polymer-Partikel zumindest teilweise umhüllende Beschichtung ausbildet, wobei das Bindemittel ein Polymer-Bindemittel ist, das nicht-hydrophil ist und einen statischen Anfangskontaktwinkel von Wasser nach 1 min Äquilibrieren ≥ 35°, eine Gesamt-Oberflächenenergie gemäß DIN 55660-2 ≤ 70 mN/m, einen polaren Anteil der Oberflächenenergie gemäß DIN 55660-2 ≤ 35 mN/m sowie einen dispersen Anteil der Oberflächenenergie gemäß DIN 55660-2 ≥ 10 mN/m aufweist.

12. Schall- und/oder Wärmedämmelement nach Anspruch 11,
**dadurch gekennzeichnet, dass** das die Beschichtung ausbildende Polymer-Bindemittel einen statischen Anfangskontaktwinkel von Wasser nach 1 min Äquilibrieren ≥ 40°, vorzugsweise ≥ 50°, aufweist.

13. Schall- und/oder Wärmedämmelement nach Anspruch 11 oder 12,
**dadurch gekennzeichnet, dass** das die Beschichtung ausbildende Polymer-Bindemittel eine Gesamt-Oberflächenenergie gemäß DIN 55660-2 ≤ 65 mN/m, vorzugsweise ≤ 60 mN/m, aufweist.

14. Schall- und/oder Wärmedämmelement nach einem der Ansprüche 11 bis 13, **dadurch gekennzeichnet, dass** das die Beschichtung ausbildende Polymer-Bindemittel einen polaren Anteil der Oberflächenenergie gemäß DIN 55660-2 ≤ 30 mN/m, vorzugsweise ≤ 25 mN/m, aufweist.

15. Schall- und/oder Wärmedämmelement nach einem der Ansprüche 11 bis 14, **dadurch gekennzeichnet, dass** das die Beschichtung ausbildende Polymer-Bindemittel einen dispersen Anteil der Oberflächenenergie gemäß DIN 55660-2 ≥ 20 mN/m, vorzugsweise ≥ 30 mN/m, aufweist.

16. Schall- und/oder Wärmedämmelement nach einem der Ansprüche 11 bis 15, **dadurch gekennzeichnet, dass** das die Beschichtung ausbildende Polymer-Bindemittel ein Bindemittel auf Basis von Acrylat, Methacrylat, Styrolacrylat, Vinylacetat, Vinylacetat-Ethylen, Vinylestern, Vinylchlorid, Polyurethan, Polysiloxane und/oder Silikonharze ist.

17. Schall- und/oder Wärmedämmelement nach einem der Ansprüche 11 bis 16, **dadurch gekennzeichnet, dass** der Polymer-Partikelschaum Polymer-Partikel aus Polystyrol, Polyurethan, Polypropylen und/oder Polyethylen enthält.

18. Schall- und/oder Wärmedämmelement nach einem der Ansprüche 11 bis 17, **dadurch gekennzeichnet, dass** der Polymer-Partikelschaum Polymer-Partikel aus einem Biopolymer, insbesondere aus Polylactid und/oder aus einem Biopolymer auf Basis von Stärke oder Cellulose, beispielsweise Celluloseacetat, Cellulosepropionat und/oder Cellulosebutyrat, enthält.

19. Schall- und/oder Wärmedämmelement nach einem der Ansprüche 11 bis 18, **dadurch gekennzeichnet, dass** ein Flammschutzmittel, vorzugsweise ein intumeszierendes Flammschutzmittel, insbesondere Blähgraphit, enthalten ist.

20. Schall- und/oder Wärmedämmelement nach einem der Ansprüche 11 bis 19, **dadurch gekennzeichnet, dass** das Schall- und/oder Wärmedämmelement nach einem Verfahren nach einem der Ansprüche 1 bis 10 hergestellt worden ist.

## Claims

1. A method for the manufacture of a sound and/or thermal insulation element using expandable and/or pre-expanded polymer particles which are coated with an organic binder and which subsequently undergo a shaping process, during which the polymer particles are bonded and sintered together, wherein the bonding is carried out by means of the binder, and wherein 60 % to 97 % by weight of expandable and/or pre-expanded polymer particles and 3 % to 40 % by weight of binder, respectively with respect to the total weight of the solid starting material, are used,
**characterized in that** a non-hydrophilic polymer binder is used in order to coat the expandable and/or pre-expanded polymer particles, which has a static initial contact angle of water, after equilibration for 1 min, of ≥ 35°, a surface energy in accordance with DIN 55660-2 of ≤ 70 mN/m, a polar fraction of the surface energy in accordance with DIN 55660-2 of ≤ 35 mN/m and a disperse fraction of the surface energy in accordance with DIN 55660-2 of ≥ 10 mN/m.

2. The method as claimed in claim 1,
**characterized in that** a polymer binder is used which has a static initial contact angle of water, after equilibration for 1 min, of ≥ 40°, preferably ≥ 50°.

3. The method as claimed in claim 1 or claim 2, **characterized in that** a polymer binder is used which has a surface energy in accordance with DIN 55660-2 of ≤ 65 mN/m, preferably of ≤ 60 mN/m.

4. The method as claimed in one of the preceding claims,
**characterized in that** a polymer binder is used which has a polar fraction of the surface energy in accordance with DIN 55660-2 of ≤ 30 mN/m, preferably of ≤ 25 mN/m.

5. The method as claimed in one of the preceding claims,
**characterized in that** a polymer binder is used which has a disperse fraction of the surface energy in accordance with DIN 55660-2 of ≥ 20 mN/m, preferably of ≥ 30 mN/m.

6. The method as claimed in one of the preceding claims,
**characterized in that** an aqueous polymer dispersion or a dispersible polymer based on acrylate, methacrylate, styrene acrylate, vinyl acetate, vinyl acetylate-ethylene, vinyl esters, vinyl chloride, polyurethane, polysiloxane and/or silicone resin is used as the binder.

7. The method as claimed in one of the preceding claims,
**characterized in that** expandable and/or pre-expanded polymer particles formed from polystyrene, polyurethane, polypropylene, polyethylene and/or polyethylene terephthalate are used.

8. The method as claimed in one of the preceding claims,
**characterized in that** expandable and/or pre-expanded polymer particles formed from a biopolymer, in particular formed from polylactide and/or from a biopolymer based on starch or cellulose, for example cellulose acetate, cellulose propionate and/or cellulose butyrate, are used.

9. The method as claimed in one of the preceding claims,
**characterized in that** at least one additive, in particular in the form of a flame retardant, is added, wherein it is preferably an intumescent flame retardant, preferably expandable graphite.

10. The method as claimed in one of the preceding claims,
**characterized in that** for the purposes of shaping, the coated polymer particles are introduced into a mould and bonded and sintered by applying pressure and/or heat.

11. Sound and/or thermal insulation formed from a polymer particle foam which comprises polymer particles which are bonded and sintered together, wherein the bonding is carried out by means of an organic binder with which the polymer particles have been coated prior to sintering, and wherein 60 % to 97 % by weight of expandable and/or pre-expanded polymer particles and 3 % to 40 % by weight of binder, respectively with respect to the total weight of the solid starting material, are used,
**characterized in that** the binder forms a coating which at least partially encases the polymer particles, wherein the binder is a polymer binder which is non-hydrophilic and which has a static initial contact angle of water, after equilibration for 1 min, of ≥ 35°, a total surface energy in accordance with DIN 55660-2 of ≤ 70 mN/m, a polar fraction of the surface energy in accordance with DIN 55660-2 of ≤ 35 mN/m as well as a disperse fraction of the surface energy in accordance with DIN 55660-2 of ≥ 10 mN/m.

12. The sound and/or thermal insulation element as claimed in claim 11,
**characterized in that** the polymer binder forming the coating has a static initial contact angle of water, after equilibration for 1 min, of ≥ 40°, preferably ≥ 50°.

13. The sound and/or thermal insulation element as claimed in claim 11 or claim 12,
**characterized in that** the polymer binder forming the coating has a total surface energy in accordance with DIN 55660-2 of ≤ 65 mN/m, preferably of ≤ 60 mN/m.

14. The sound and/or thermal insulation element as claimed in one of claims 11 to 13,
**characterized in that** the polymer binder forming the coating has a polar fraction of the surface energy in accordance with DIN 55660-2 of ≤ 30 mN/m, preferably of ≤ 25 mN/m.

15. The sound and/or thermal insulation element as claimed in one of claims 11 to 14,
**characterized in that** the polymer binder forming the coating has a disperse fraction of the surface energy in accordance with DIN 55660-2 of ≥ 20 mN/m, preferably of ≥ 30 mN/m.

16. The sound and/or thermal insulation element as claimed in one of claims 11 to 15,
**characterized in that** the polymer binder forming the coating is a binder based on acrylate, methacrylate, styrene acrylate, vinyl acetate, vinyl acetylate-ethylene, vinyl esters, vinyl chloride, polyurethane, polysiloxane and/or silicone resin is used as the binder.

17. The sound and/or thermal insulation element as claimed in one of claims 11 to 16,
**characterized in that** the polymer particle foam contains polymer particles formed from polystyrene, polyurethane, polypropylene and/or polyethylene.

18. The sound and/or thermal insulation element as claimed in one of claims 11 to 17,
**characterized in that** the polymer particle foam contains polymer particles formed from a biopolymer, in particular formed from polylactide and/or from a biopolymer based on starch or cellulose, for example cellulose acetate, cellulose propionate and/or cellulose butyrate.

19. The sound and/or thermal insulation element as claimed in one of claims 11 to 18,
**characterized in that** it contains a flame retardant, preferably an intumescent flame retardant, in particular expandable graphite.

20. The sound and/or thermal insulation element as claimed in one of claims 11 to 19,
**characterized in that** the sound and/or thermal insulation element is manufactured in accordance with a method as claimed in one of claims 1 to 10.

## Revendications

1. Procédé destiné à fabriquer un élément isolant phonique et/ou isolant thermique en utilisant des particules de polymère expansibles et/ou pré-expansées, que l'on revêt d'un liant organique et que l'on soumet par la suite à un processus de façonnage lors duquel on colle les particules de polymère et on les fritte les unes avec les autres, le collage étant provoqué à l'aide du liant et de 60 à 97 % en poids de particules de polymère expansibles et ou pré-expansées et de 3 à 40 % en poids de liant, respectivement rapportés au poids total en matière solide de la matière de départ étant utilisés,
**caractérisé en ce que** pour revêtir les particules de polymère expansibles et/ou pré-expansées, on utilise un liant polymère non hydrophile qui fait preuve d'un angle de contact statique initial de l'eau après 1 minute d'équilibrage ≥ 35°, d'une énergie superficielle selon DIN 55660-2 ≤ 70 mN/m, d'une part polaire de l'énergie superficielle selon DIN 55660-2 ≤ 35 mN/m et d'une part dispersée de l'énergie superficielle selon DIN 55660-2 ≥ 10 mN/m.

2. Procédé selon la revendication 1,
**caractérisé en ce qu'**on utilise un liant polymère qui fait preuve d'un angle de contact statique initial de l'eau après 1 minute d'équilibrage ≥ 40°, de préférence ≥ 50°.

3. Procédé selon la revendication 1 ou 2,
**caractérisé en ce qu'**on utilise un liant polymère qui fait preuve d'une énergie superficielle selon DIN 55660-2 ≤ 65 mN/m, de préférence ≤ 60 mN/m.

4. Procédé selon l'une quelconque des revendications précédentes,
**caractérisé en ce qu'**on utilise un liant polymère qui fait preuve d'une part polaire de l'énergie superficielle selon DIN 55660-2 ≤ 30 mN/m, de préférence ≤ 25 mN/m.

5. Procédé selon l'une quelconque des revendications précédentes,
**caractérisé en ce qu'**on utilise un liant polymère qui fait preuve d'une part dispersée de l'énergie superficielle selon DIN 55660-2 ≤ 20 mN/m, de préférence ≥ 30 mN/m.

6. Procédé selon l'une quelconque des revendications précédentes,
**caractérisé en ce qu'**on utilise en tant que liant une dispersion polymère aqueuse sur base d'acrylate, de méthacrylate, de styrène-acrylate, de vinylacétate, d'acétate de vinyle-éthylène, d'esters vinyliques, de chlorure de vinyle, de polyuréthane, de polysiloxanes et/ou de résines de silicone.

7. Procédé selon l'une quelconque des revendications précédentes,
**caractérisé en ce qu'**on utilise des particules de polymère expansibles et/ou pré-expansées en polystyrène, en polyuréthane, en polypropylène, en polyéthylène et/ou en polyéthylène-téréphtalate.

8. Procédé selon l'une quelconque des revendications précédentes,
**caractérisé en ce qu'**on utilise des particules de polymère expansibles et/ou pré-expansées en un biopolymère, notamment en polylactide et/ou en un biopolymère sur base d'amidon ou de cellulose, par exemple de l'acétate cellulosique, du propionate cellulosique et/ou du butyrate cellulosique.

9. Procédé selon l'une quelconque des revendications précédentes,
**caractérisé en ce qu'**on ajoute au moins un additif, notamment sous la forme d'un agent ignifuge, pour lequel il s'agit de préférence d'un agent ignifuge intumescent, de préférence de graphite expansé.

10. Procédé selon l'une quelconque des revendications précédentes,
**caractérisé en ce que** pour le façonnage, on introduit les particules de polymère revêtues dans un moule et on les colle et on les fritte sous ajout de pression et/ou de chaleur.

11. Élément isolant phonique et/ou isolant thermique en une mousse de particules de polymère, laquelle comprend des particules de polymère collées et frittées les unes avec les autres, le collage étant provoqué à l'aide d'un liant organique avec lequel les particules de polymère ont été revêtues avant le frittage, et de 60 à 97 % en poids de particules de polymère expansibles et/ou pré-expansées et de 3 à 40 % en poids d'agent liant, chaque fois rapportés au poids total en matière solide ayant été utilisés,
**caractérisé en ce que** le liant forme un revêtement enrobant au moins partiellement les particules de polymère, le liant étant un liant polymère qui est hydrophile et qui fait preuve d'un angle de contact statique initial de l'eau après 1 minute d'équilibrage ≥ 35°, d'une énergie superficielle totale selon DIN 55660-2 ≤ 70 mN/m, d'une part polaire de l'énergie superficielle selon DIN 55660-2 ≤ 35 mN/m, ainsi que d'une part dispersée de l'énergie superficielle selon DIN 55660-2 ≥ 10 mN/m.

12. Élément isolant phonique et/ou isolant thermique selon la revendication 11,
**caractérisé en ce que** l'agent polymère formant le revêtement fait preuve d'un angle de contact statique initial de l'eau après 1 minute d'équilibrage ≥ 40°, de préférence ≥ 50°.

13. Élément isolant phonique et/ou isolant thermique selon la revendication 11 ou 12, **caractérisé en ce que** l'agent polymère formant le revêtement fait preuve d'une énergie superficielle totale selon DIN 55660-2 ≤ 65 mN/m, de préférence ≤ 60 mN/m.

14. Élément isolant phonique et/ou isolant thermique selon l'une quelconque des revendications 11 à 13,
**caractérisé en ce que** le liant polymère formant le revêtement fait preuve d'une part polaire de l'énergie superficielle selon DIN 55660-2 ≤ 30 mN/m, de préférence ≤ 25 mN/m.

15. Élément isolant phonique et/ou isolant thermique selon l'une quelconque des revendications 11 à 14,
**caractérisé en ce que** le liant polymère formant le revêtement fait preuve d'une part dispersée de l'énergie superficielle selon DIN 55660-2 ≥ 20 mN/m, de préférence ≥ 30 mN/m.

16. Élément isolant phonique et/ou isolant thermique selon l'une quelconque des revendications 11 à 15,
**caractérisé en ce que** le liant polymère formant le revêtement est un liant sur base d'acrylate, de méthacrylate, de styrène-acrylate, de vinylacétate, d'acétate de vinyle-éthylène, d'esters vinyliques, de chlorure de vinyle, de polyuréthane, de polysiloxanes et/ou de résines de silicone.

17. Élément isolant phonique et/ou isolant thermique selon l'une quelconque des revendications 11 à 16,
**caractérisé en ce que** la mousse de particules de polymère contient des particules de polymère en polystyrène, en polyuréthane, en polypropylène et/ou en polyéthylène.

18. Élément isolant phonique et/ou isolant thermique selon l'une quelconque des revendications 11 à 17,
**caractérisé en ce que** la mousse de particules de polymère contient des particules en un biopolymère, notamment en polylactide et/ou en un biopolymère sur base d'amidon ou de cellulose, par exemple de l'acétate cellulosique, du propionate cellulosique et/ou du butyrate cellulosique.

19. Élément isolant phonique et/ou isolant thermique selon l'une quelconque des revendications 11 à 18,
**caractérisé en ce qu'**un agent ignifuge, de préférence un agent ignifuge intumescent, notamment du graphite expansé est contenu.

20. Élément isolant phonique et/ou isolant thermique selon l'une quelconque des revendications 11 à 19,
**caractérisé en ce que** l'élément isolant phonique et/ou isolant thermique a été fabriqué d'après un procédé selon l'une quelconque des revendications 1 à 10.
